# EUROPEAN PATENT SPECIFICATION

(11) **EP 3 470 626 B1**
(45) Date of publication and mention of the grant of the patent: **18.11.2020**
(21) Application number: 18199744.6
(22) Date of filing: 10.10.2018
(51) Int. Cl.: F01D 5/02, F01D 5/34

(54) **TURBOCHARGER HAVING IMPROVED TURBINE WHEEL**
TURBOLADER MIT VERBESSERTEM TURBINENRAD
TURBOCOMPRESSEUR À SURALIMENTATION AVEC ROUE DE TURBINE AMÉLIORÉE

(30) Priority: 12.10.2017 US 201715782453
(43) Date of publication of application: 17.04.2019
(73) Proprietor: BorgWarner Inc., Auburn Hills, MI 48326 (US)
(72) Inventor: YELLAPRAGADA, Laskhmi Srikar, Arden, NC 28704 (US); GRABOWSKA, David George, Asheville, NC 28803 (US)
(74) Representative: Peterreins Schley

(56) References cited:
- EP-A1- 3 034 781
- EP-A1- 3 128 181
- WO-A1-2013/165716
- DE-A1-102007 047 668
- JP-A- 2002 047 944

## Description

### BACKGROUND OF INVENTION

### 1. Field of the Invention

The present invention relates generally to turbochargers and, more specifically, to a turbocharger having an improved turbine wheel for better manufacturability.

### 2. Description of the Related Art

It is known to provide a turbocharger for an engine of a vehicle such as an automotive vehicle. An automotive turbocharger typically includes a compressor wheel and a turbine wheel on a common turbocharger shaft supported by bearings in a bearing housing. Alternatively, the compressor wheel and turbine wheel may be mechanically decoupled, wherein the turbine wheel drives an electric generator that, in turn, delivers electrical power to an electric motor that drives the compressor wheel. The turbine wheel of the turbocharger extracts energy from exhaust gas of the engine, and the extracted energy is transferred to the compressor wheel. The compressor wheel increases an intake air density into the engine, which in turn allows for a greater quantity of fuel to be burned for a given air-fuel ratio. As a result, the engine develops more power.

A turbine wheel is usually made of a metal alloy that is able to withstand the high temperatures and corrosive gasses to which the turbine wheel is exposed. The turbine wheel and the compressor wheel are typically joined to the turbocharger shaft in different manners. Typically, the compressor wheel has a through-going bore through which the turbocharger shaft is inserted. Thereafter, the compressor wheel is fixed to the turbocharger shaft via a nut. Alternatively, the through-going bore of the compressor wheel may include internal threads that engage external threads on the turbocharger shaft to fix the compressor wheel to the turbocharger shaft. The turbine wheel is typically solid and is materially fixed to the turbocharger shaft by welding or brazing. Examples of turbine wheels are disclosed in U.S. Patent Application Publication No. 2010/0003132 to Holzschuh and U.S. Patent No. 9,624,776 to Chandramohanan et al.

EP3034781A1 relates to an exhaust-gas turbocharger having a turbine wheel which is connected in a rotationally fixed manner to a compressor wheel via a shaft. The turbine wheel has a hub, a disk-like wheel back and a plurality of blades extending radially from the hub extending axially from the wheel back. The wheel back of the turbine wheel has at least one recess area with a reduced axial thickness.

Turbine wheels either have a full backwall in which an outer diameter of the backwall extends to or past an outermost dimension of the turbine blades, or a partial, or scalloped, backwall in which the turbine blades extend past the outer diameter of the backwall. Castings for turbine wheels having full backwalls may have waviness on the backwalls, especially on flat surfaces near outer diameters of the backwalls. Such waviness has been confirmed by casting simulations and physical part measurements. Typically, the backwall includes a datum surface that is used to materially fix the turbine wheel to the turbocharger shaft and for other processes. However, the waviness or other irregularities of the backwall can impart waviness to the datum surface, resulting in manufacturing challenges such as maintaining perpendicularity between a wheel axis and the datum surface.

Therefore, it is desirable to provide a turbine wheel having a backwall shape with a datum surface located at a geometrically stable region in a casting. It is also desirable to provide a turbocharger with a turbine wheel in which a flat portion of the backwall at the outer diameter or tip of the wheel may still be used for balance correction but not be considered as a datum. Thus, there is a need in the art to provide a turbocharger with an improved turbine wheel that meets at least one of these desires.

### SUMMARY OF THE INVENTION

The present invention provides a turbine wheel according to claim 1.

The present invention also provides a turbocharger including the turbine wheel as set forth above to receive exhaust gas from an internal combustion engine, and a turbocharger shaft coupled to and rotatable by the turbine wheel, the turbocharger shaft extending along a longitudinal axis.

One advantage of the present invention is that a turbine wheel is provided for a turbocharger having a backwall with a datum ring integrally cast with a backwall surface, wherein the datum ring is located at a geometrically stable region and defines a datum surface. Another advantage of the present invention is that the datum ring of the turbine wheel results in the turbine wheel remaining perpendicular with a longitudinal axis of a turbocharger shaft and may reduce waviness of the backwall when cast. Yet another advantage of the present invention is that the turbine wheel has a flat portion of the backwall surface at an outer diameter or a tip of the wheel that may still be used for balance correction but not be considered as a datum. Still another advantage of the present invention is that the datum ring of the turbine wheel results in a quicker manufacturing process and a reduction in scrap rates.

Other objects, features, and advantages of the present invention will be readily appreciated as the same becomes better understood after reading the subsequent description taken in connection with the accompanying drawings.

### BRIEF DESCRIPTION OF THE DRAWINGS

Figure 1 is a sectional view of a turbocharger, according to one embodiment of the present invention.
Figure 2 is a sectional view of a compressor wheel, turbocharger shaft, and a turbine wheel of the turbocharger of Figure 1.
Figure 3 is a perspective view of one embodiment of a turbine wheel, according to the present invention, of the turbocharger of Figure 1.
Figure 4 is an elevational view of the turbine wheel of Figure 3.
Figures 5A and 5B are diagrammatic views of the turbine wheel having a generic backwall surface and a generic backwall surface including a datum ring, according to the present invention, respectively.
Figures 5C and 5D are diagrammatic views of the turbine wheel having a superback backwall surface and a superback backwall surface including a datum ring, according to the present invention, respectively.
Figures 5E and 5F are diagrammatic views of the turbine wheel having a curving backwall surface and a curving backwall surface including a datum ring, according to the present invention, respectively.
Figures 5G and 5H are diagrammatic views of the turbine wheel having a flat backwall surface and a flat backwall surface including a datum ring, according to the present invention, respectively.
Figure 6 is an enlarged sectional view of a portion of the turbine wheel of Figure 4.
Figure 7 is a sectional view of a portion of the turbine wheel of Figure 4.
Figure 8 is an enlarged view of the portion in circle 8 of Figure 7 illustrating an overlay of a Line Arc Line Arc (LALA) backwall surface.
Figure 9 is a graph of backwall surface flatness of the turbine wheel of Figure 6.

### DETAILED DESCRIPTION OF THE INVENTION

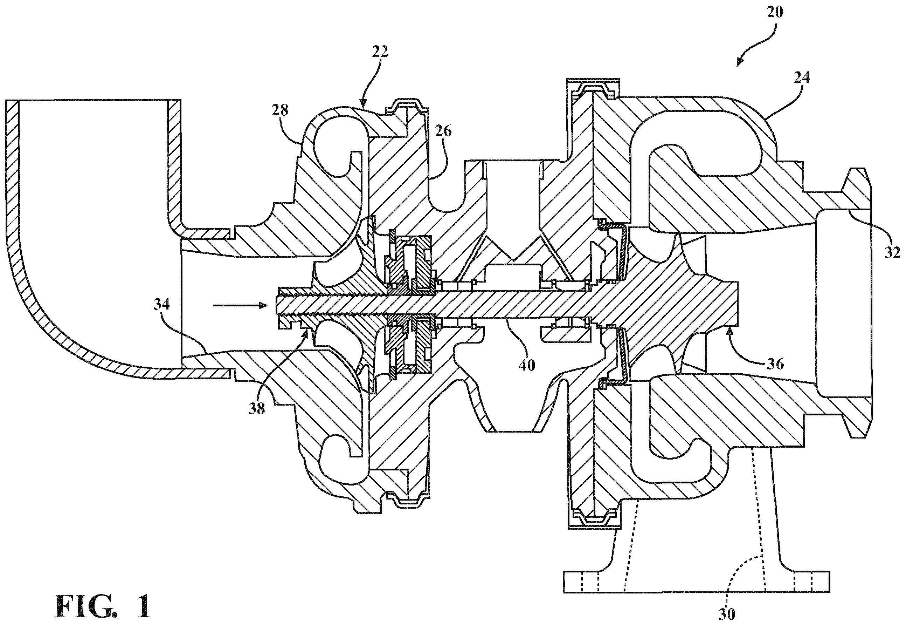

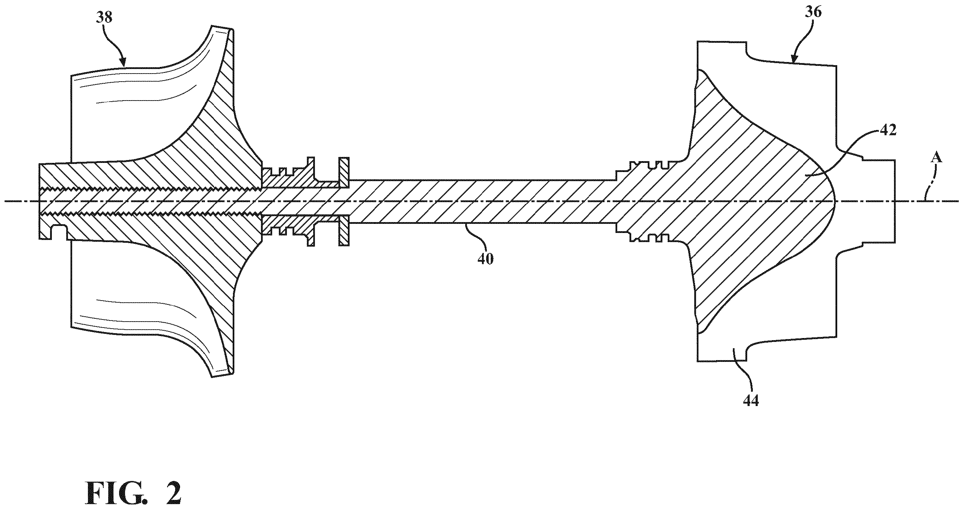

Referring now to the figures, where like numerals are used to designate like structure unless otherwise indicated, a turbocharger 20, according to one embodiment of the present invention, is shown in Figure 1. As illustrated in Figure 1, the turbocharger 20 includes a housing, generally indicated at 22, having a turbine housing 24, a bearing housing 26, and a compressor housing 28. The turbine housing 24 has a turbine exhaust gas inlet 30 to receive exhaust gas from an internal combustion engine (not shown) and a turbine exhaust gas outlet 32. The compressor housing 28 has a compressor ambient air inlet 34 to receive ambient airflow as indicated by the arrow and a compressor air discharge outlet (not shown) to deliver compressed air to the internal combustion engine. The turbocharger 20 also includes a rotatable turbine wheel, generally indicated at 36, disposed in the turbine housing 24 and a rotatable compressor wheel, generally indicated at 38, disposed in the compressor housing 28. The turbocharger 20 further includes a rotatable turbocharger shaft 40 coupled to the turbine wheel 36 and the compressor wheel 38 and rotationally supported by bearings in the bearing housing 26. The turbocharger shaft 40 extends along a longitudinal axis A as illustrated in Figure 2. The turbine wheel 36 is solidly affixed to one end of the turbocharger shaft 40, becoming a shaft and wheel assembly, and the compressor wheel 38 is coupled to the other end of the turbocharger shaft 40 by a suitable mechanism such as threads or a nut. An exemplary turbocharger is disclosed in U.S. Patent Application Publication No. 2015/0219121 to King.

In another embodiment, the turbocharger 20 may include an electric motor (not shown) to electrically power and drive the compressor wheel 36. The electric motor is of a high speed type and may be constructed using magnetically loaded composite (MCL) rotor technology. The electric motor includes a rotor coupled to the turbocharger shaft 40 and a stator connected to a housing. The housing may be connected to the compressor housing 28. The compressor wheel 38 is provided on one end of the turbocharger shaft 40. The electric motor may be powered by batteries, a generator, or a fuel cell. It should be appreciated that an example of a turbocharger with an electrically powered compressor is disclosed in International Patent Application Publication No. WO 03/040567 to Pflueger et al.

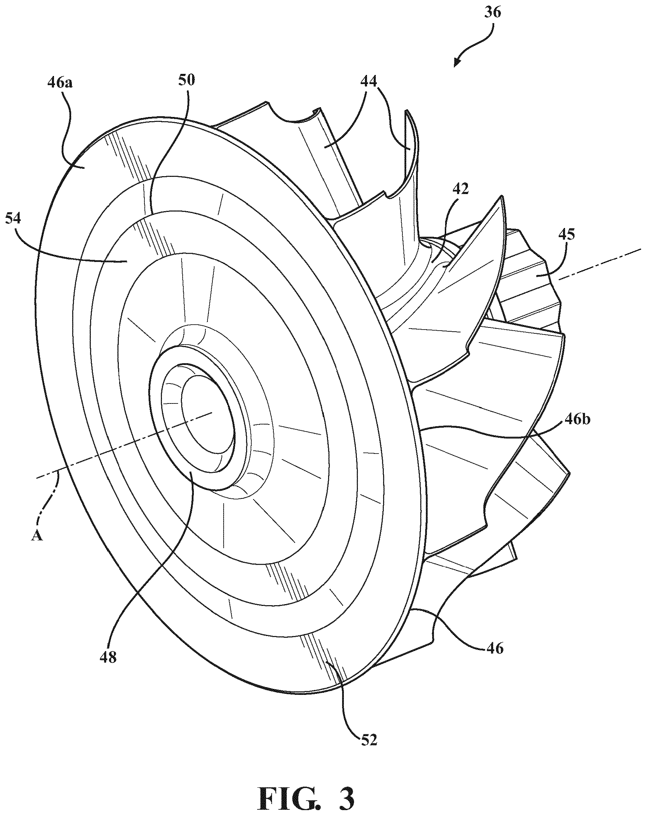

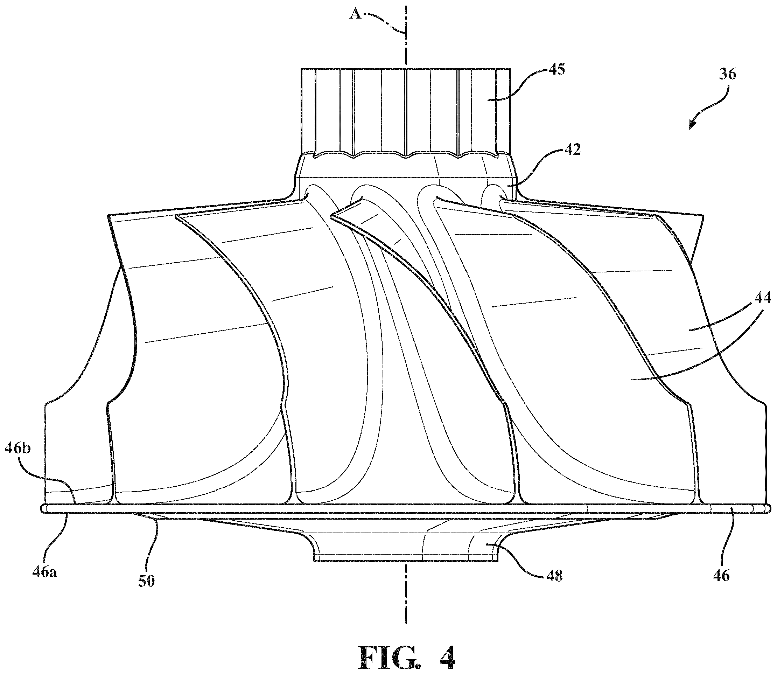

Referring to Figures 3 and 4, in one embodiment of the turbocharger 20, the turbine wheel 36, according to the present invention, includes a hub 42 and a plurality of blades 44 extending radially and axially from the hub 42 and facing toward the turbine exhaust gas outlet 32. The hub 42 includes a nose 45 at one end. In one embodiment, the nose 45 may be hexagonal or 12-point in shape. The hub 42 also includes a backwall 46 extending radially relative to the longitudinal axis A. In one embodiment, the backwall 46 is generally circular in shape. The backwall 46 includes a first backwall surface 46a facing away from the turbine exhaust gas outlet 32. The hub 42 further includes a shaft connecting region or journal 48 extending axially from the first backwall surface 46a relative to the longitudinal axis A to be coupled to the turbocharger shaft 40. It should be appreciated that the blades 44 extend from the hub 42 and to a second backwall surface 46b of the backwall 46 opposite the first backwall surface 46a.

As illustrated in Figure 3, at least some embodiments of the turbine wheel 36 include a datum ring 50 disposed on the first backwall surface 46a of the backwall 46. The datum ring 50 is integrally cast with and is formed in the first backwall surface 46a of the backwall 46. The datum ring 50 extends circumferentially about the longitudinal axis A. A datum surface 54 of the datum ring 50, facing away from the blades 44 of the turbine wheel 36, is used to axially locate rotating assembly aerodynamics (compressor wheel 38 and turbine wheel 36) in a desired or predetermined location in the compressor housing 28 and the turbine housing 24. The turbine wheel 36 is made of a rigid material such as metal and typically formed from a casting. The turbine wheel 36 is integral, unitary, and one-piece. It should be appreciated that the shaft connecting journal 48 of the turbine wheel 36 is connected to the turbocharger shaft 40.

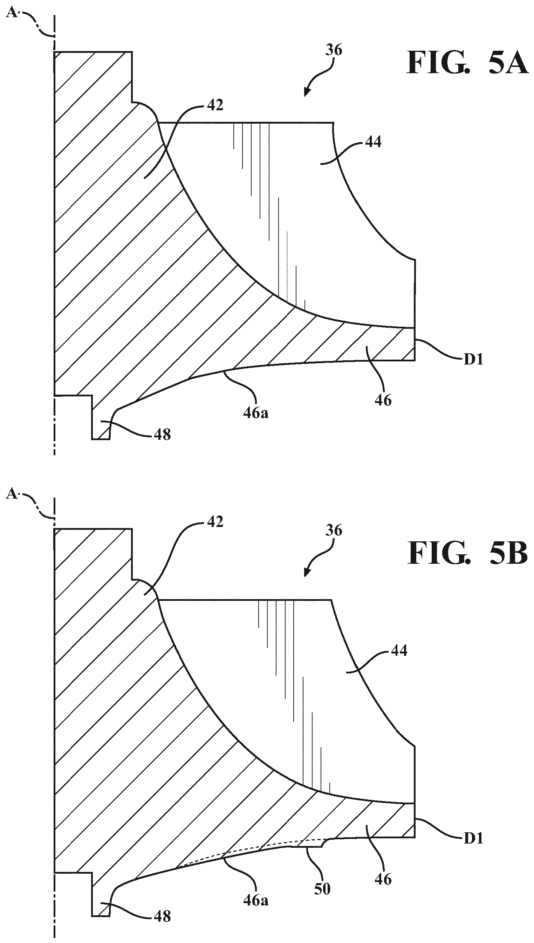

Referring to Figures 5A and 5B, in one embodiment, the turbine wheel 36 is shown having a generic first backwall surface 46a and a generic first backwall surface 46a including the datum ring 50, respectively. As illustrated, the blades 44 extend radially to the outer diameter D1 of the backwall 46. The first backwall surface 46a extends from the shaft connecting journal 48 to the outer diameter D1. In the turbine wheel 36 of Figure 5A, there is no datum ring 50 in the first backwall surface 46a. In the turbine wheel 36 of Figure 5B, the first backwall surface 46a includes the datum ring 50. It should be appreciated that the original first backwall surface 46a of Figure 5A is illustrated as a dashed line in Figure 5B.

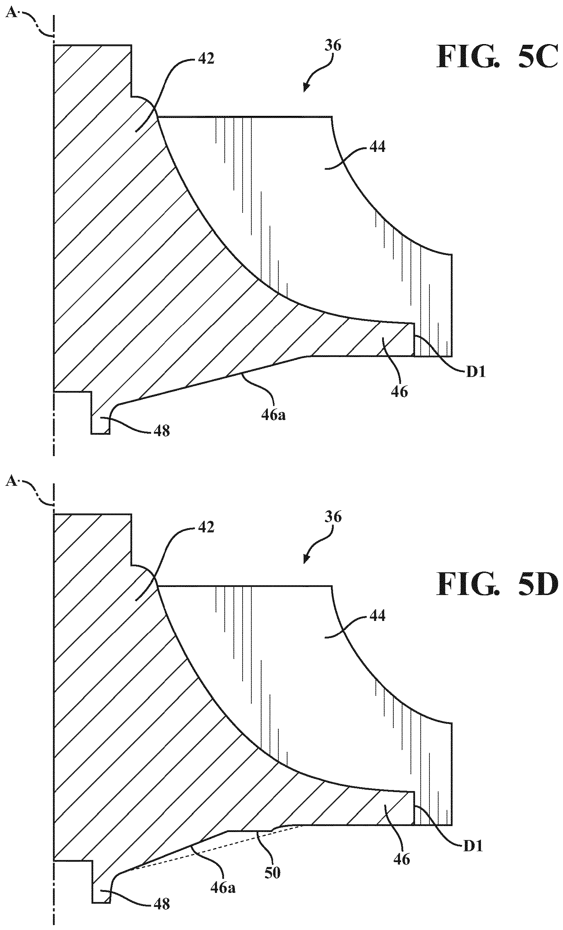

Referring to Figures 5C and 5D, in another embodiment, the turbine wheel 36 is shown having a superback first backwall surface 46a and a superback first backwall surface 46a including the datum ring 50, respectively. As illustrated, the blades 44 extend radially past the outer diameter D1 of the backwall 46. The first backwall surface 46a extends from the shaft connecting journal 48 to the outer diameter D1. In the turbine wheel 36 of Figure 5C, there is no datum ring 50 in the first backwall surface 46a. In the turbine wheel 36 of Figure 5D, the first backwall surface 46a includes the datum ring 50. It should be appreciated that the original first backwall surface 46a of Figure 5C is illustrated as a dashed line in Figure 5D.

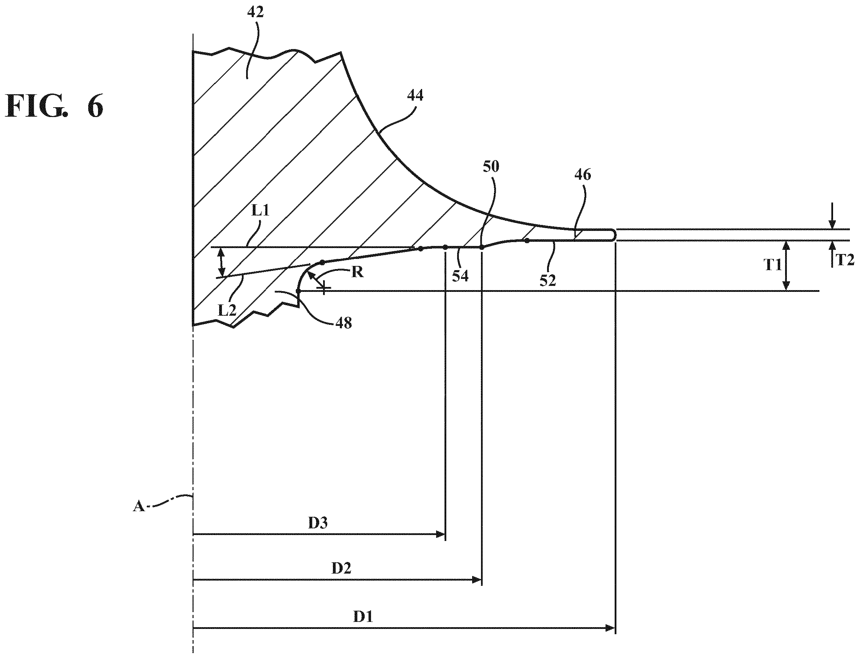

More specifically, viewed in cross section as illustrated in Figure 6, an extended line along a conventional planar region of the first backwall surface 46a is defined as line L1. The conical reinforced section of the first backwall surface 46a is defined by a second line L2. The longitudinal axis A defines a third line. To be a superback surface, the length of the side of a triangle formed by L1, L2, and the longitudinal axis A must be at least 2%, preferably 2-10%, most preferably 3-6% of the outer diameter D1 of the turbine wheel 36. In the embodiment illustrated, radius R between the line L2 and the datum surface 54 corresponding to at least 10% and at most 40% of the outer diameter D1 of the turbine wheel 36, preferably at least 15% and at most 35% of the outer diameter D1 of the turbine wheel 36, most preferably 20-30% of the outer diameter D1 of the turbine wheel 36. It should be appreciated that the outer diameter D1 extends on both sides of the longitudinal axis A.

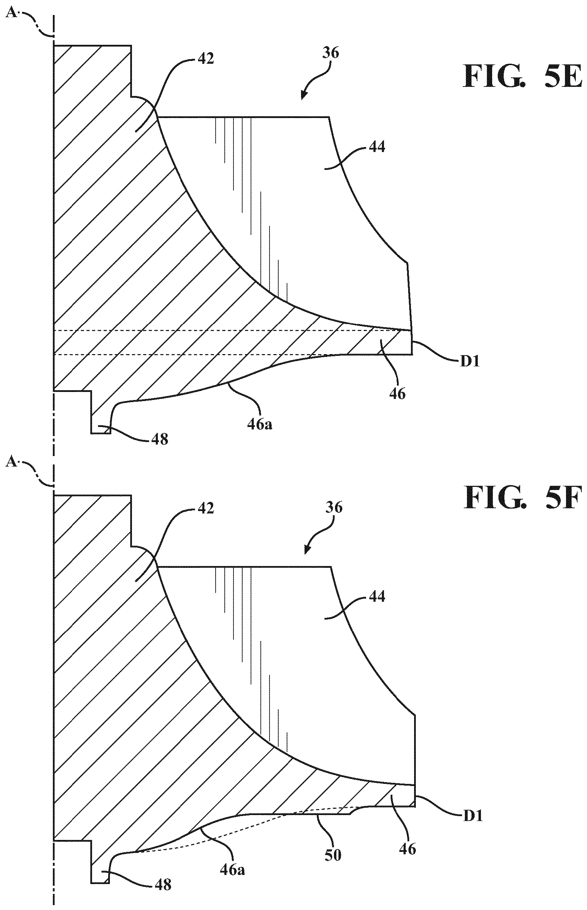

Referring to Figures 5E and 5F, in yet another embodiment, the turbine wheel 36 is shown having a curving first backwall surface 46a and a curving first backwall surface 46a including the datum ring 50, respectively. As illustrated, the blades 44 extend radially to the outer diameter D1 of the backwall 46. The first backwall surface 46a extends from the shaft connecting journal 48 to the outer diameter D1. In the turbine wheel 36 of Figure 5E, there is no datum ring 50 in the first backwall surface 46a. In the turbine wheel 36 of Figure 5F, the first backwall surface 46a includes the datum ring 50. It should be appreciated that the original first backwall surface 46a of Figure 5E is illustrated as a dashed line in Figure 5F.

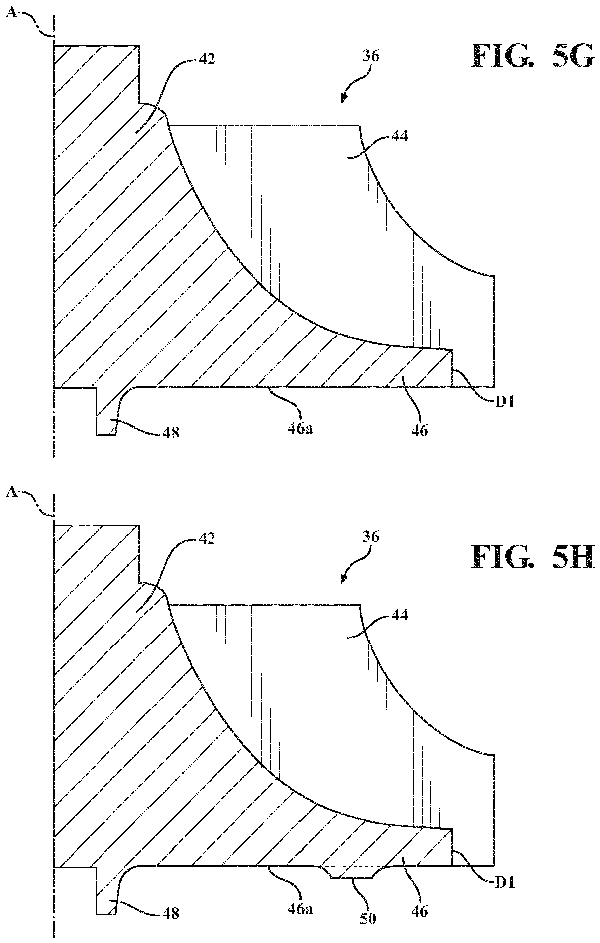

Referring to Figures 5G and 5H, in still another embodiment, the turbine wheel 36 is shown having a flat first backwall surface 46a and a flat first backwall surface 46a including the datum ring 50, respectively. As illustrated, the blades 44 extend radially past the outer diameter D1 of the backwall 46. The first backwall surface 46a extends from the shaft connecting journal 48 to the outer diameter D1. In the turbine wheel 36 of Figure 5G, there is no datum ring 50 in the first backwall surface 46a. In the turbine wheel 36 of Figure 5H, the first backwall surface 46a includes the datum ring 50. It should be appreciated that the original first backwall surface 46a of Figure 5G is illustrated as a dashed line in Figure 5H. It also should be appreciated that, in the embodiment illustrated, the datum ring 50 extends axially away from the first backwall surface 46a.

Referring again to Figure 6, the turbine wheel 36 has a first or outer diameter D1. The datum ring 50 has an outer circumference defined by a second diameter D2 about the longitudinal axis A and an inner circumference defined by a third diameter D3 about the longitudinal axis A. The diameter D1 is greater than the diameter D2 and the diameter D2 is greater than the diameter D3. In at least one embodiment, the datum ring 50 is located at a radial point between approximately 50% and approximately 85% of the outer diameter D1 of the turbine wheel 36 about the longitudinal axis A. Alternatively, the datum ring 50 is located at a radial point between 50% and 85% of the outer diameter D1 of the turbine wheel 36 about the longitudinal axis A. In at least one embodiment, the datum ring 50 is located at a radial point between approximately 55% and approximately 65% of the outer diameter D1 of the turbine wheel 36 about the longitudinal axis A. Alternatively, the datum ring 50 is located at a radial point between 55% and 65% of the outer diameter D1 of the turbine wheel 36 about the longitudinal axis A. In at least one embodiment, the datum ring 50 is located at a radial point between approximately 58% and approximately 62% of the way from the longitudinal axis A to the outer diameter D1 of the turbine wheel 36 about the longitudinal axis A. Alternatively, the datum ring 50 is located at a radial point between 58% and 62% of the way from the longitudinal axis A to the outer diameter D1 of the turbine wheel 36 about the longitudinal axis A. It should be appreciated that the optimal location of the datum ring 50 may vary with the aerodynamic design, especially the curvature of the hub 42.

The embodiment of the turbine wheel 36 illustrated in Figure 6 has a flat or planar portion 52 of the backwall surface 46a at the outer diameter D1 of the wheel 36 that may be used for balance correction, but is not used as a datum. The flat portion 52 of the first backwall surface 46a of the backwall 46 includes at least one of a notch, scallop, or channel. The flat or planar datum surface 54 of the datum ring 50 is defined between the second diameter D2 and the third diameter D3. The datum surface 54 is used to establish perpendicularity with the longitudinal axis A. The turbine wheel 36 has a first thickness T1 that extends from the first backwall surface 46a to the shaft connecting journal 48. The flat portion 52 has a thickness T2 defined between the backwall surfaces 46a and 46b. The thickness T1 is greater than the thickness T2. It should be appreciated that each of the outer diameter D1, the second diameter D2, and the third diameter D3 are coaxial with respect to the longitudinal axis A. It should also be appreciated that the datum ring 50 is located in an area of the first backwall surface 46a such that the datum surface 54 is dimensionally stable, meaning the area is substantially unsusceptible to geometry variations such as waviness. It should further be appreciated that the datum ring 50 results in the turbine wheel 36 remaining perpendicular with the longitudinal axis A and that the thickness provided by the datum ring 50 reduces waviness of the backwall 46 when cast, thus balancing the turbine wheel 36. It should still further be appreciated that the minimum amount of "flat" portion 52 of the backwall surface 46a corresponding to line L1 is the amount that will provide a surface for balancing operations.

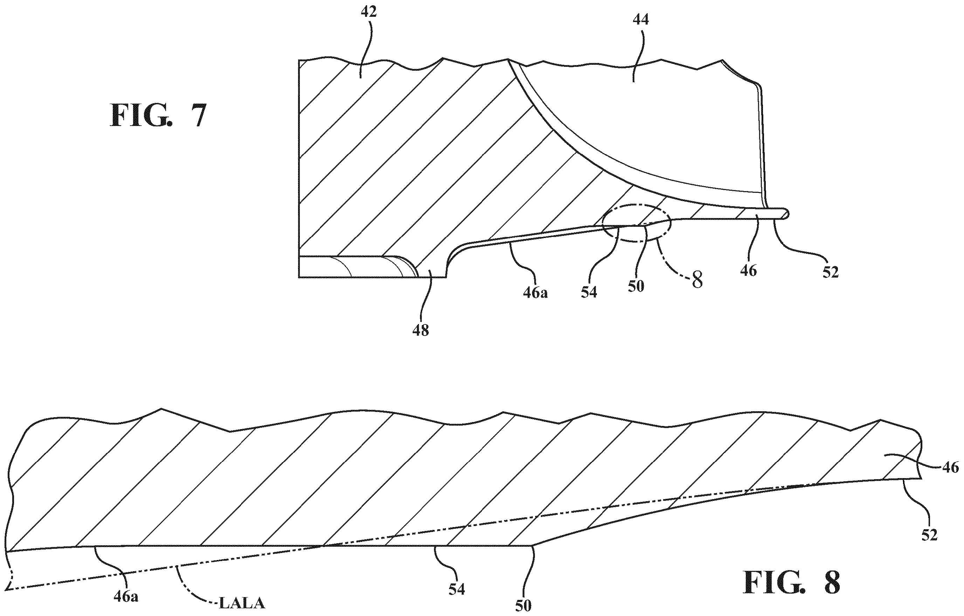

Referring to Figure 8, a portion in circle 8 of Figure 7 is shown for the turbine wheel 36 with the backwall 46 having the datum ring 50. As illustrated, a Line Arc Line Arc (LALA) first backwall surface shown in phantom lines is overlayed over the first backwall surface 46a having the datum ring 50 of the turbine wheel 36. It should be appreciated that the LALA backwall surface may be modified to reduce stresses in critical areas of the datum ring 50. It should also be appreciated that the datum ring 50 is cast into the first backwall surface 46a of the turbine wheel 36 for manufacturing purposes.

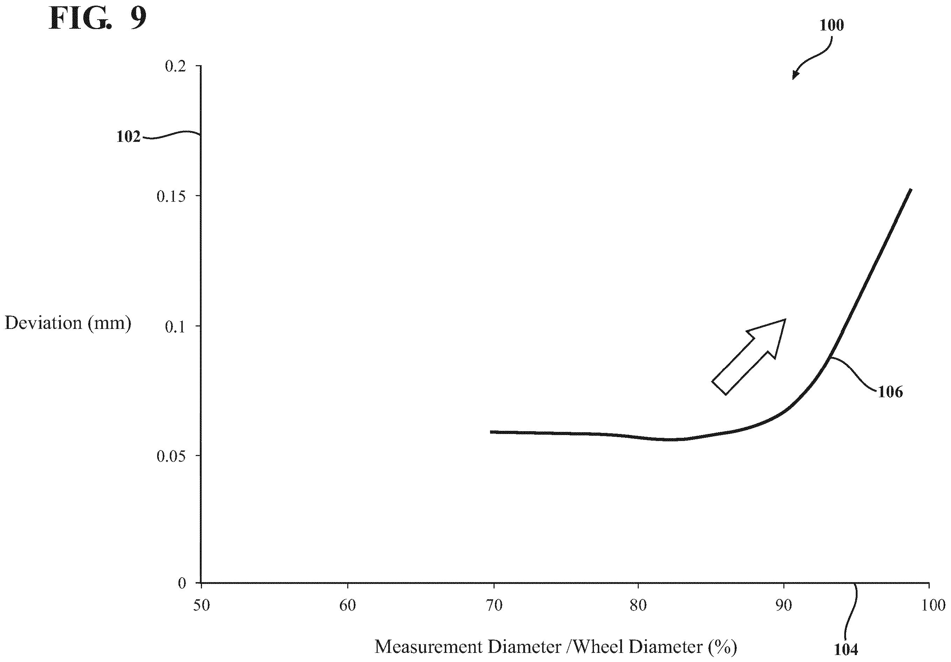

Referring to Figure 9, a graph 100 of backwall surface runout measurements taken at different diameters for a full backwall 46 of the turbine wheel 36 of the turbocharger 20 is shown. The graph 100 has a vertical axis 102 of deviation in millimeters (mm) and a horizontal axis 104 of measurement diameter/wheel diameter in percentage (%). The graph 100 also includes a plot 106 that illustrates backwall surface waviness increases with radius near the tip or outer diameter D1 of the turbine wheel 36. It should be appreciated that backwall surface flatness measurements were taken at different diameters on physical parts of turbine wheels. It should also be appreciated that the datum ring 50 would be located at a diameter inboard of any backwall surface waviness or before backwall surface waviness increases. It should further be appreciated that locating the datum ring 50 at a geometrically stable region of the first backwall surface 46a results in the turbine wheel 36 remaining perpendicular with the longitudinal axis A.

During manufacture, a raw turbocharger shaft 40 is put in a fixture (not shown) that grips a cylindrical body of the turbocharger shaft 40. This centers the turbocharger shaft 40 and establishes the axis A of the turbocharger shaft 40. The turbocharger shaft 40 is then friction welded to the turbine wheel 36 to form a shaft and wheel assembly. The shaft and wheel assembly is put into another fixture (not shown) that centers the cone at the end of the nose 45 of the turbine wheel 36 and the datum surface 54 is put against a flat surface to orient the turbine wheel 36 perpendicular to an axis of the fixture. This establishes the axis of the turbine wheel 36. Countersunk center holes are then drilled in the nose 45 of the turbine wheel 36 and the end of the raw turbocharger shaft 40. The center holes now define the axis A of the shaft and wheel assembly. The turbocharger shaft 40 is machined down to the final geometry. The shaft and wheel assembly is then balanced to align the center of mass with the axis A of the shaft and wheel assembly.

In operation, the farther the datum surface 54 is from the axis of the turbine wheel 36, the more accurately the perpendicularity. The problem is that when the first backwall surface 46a is wavy at the outer diameter OD and the datum surface 54 is in that region, the datum plane becomes only a small area in contact with the flat surface of the fixture and the axis of the turbine wheel 36 shifts away from a center of gravity. The present invention of the datum ring 50 moves the datum surface 54 inwards to a point where the non-uniformity of the backwall 46 is low. This stable datum surface 54 provides better perpendicularity at the smaller diameter than a datum surface with a larger diameter in a wavy backwall area of the turbine wheel. It should be appreciated that the end result is that the shaft and wheel assembly center of gravity and the wheel axis are in better alignment.

Accordingly, the turbocharger 20 of the present invention provides a turbine wheel 36 having a backwall 46 with a datum ring 50 integrally cast with and axially displaced from the backwall 46 with a datum surface 54 located at a geometrically stable region. The turbocharger 20 of the present invention provides the turbine wheel 36 with a flat portion 52 on the backwall 46 at an outer diameter D1 of the turbine wheel 36 that may still be used for balance correction, but not be considered as a datum. The turbocharger 20 of the present invention provides the datum ring 50 that results in the turbine wheel 36 remaining perpendicular with the longitudinal axis A, resulting in a quicker manufacturing process and a reduction in scrap rates.

## Claims

1. A turbine wheel (36) for a turbocharger (20) comprising:
a hub (42);
a plurality of blades (44) extending from said hub (42); and
a backwall (46) extending from said hub (42) and having an outer diameter (D1), wherein said backwall (46) includes a first backwall surface (46a) and an opposing second backwall surface (46b);
**characterized in that** said first backwall surface (46a) includes a datum ring (50) having a diameter in a range between 50% and 85% of said outer diameter (D1), and **in that** said turbine wheel is integrally cast.

2. A turbine wheel (36) as set forth in claim 1 wherein said datum ring (50) is further defined in a range between 55% and 65% of said outer diameter (D1).

3. A turbine wheel (36) as set forth in claim 1 wherein said datum ring (50) is further defined in a range between 58% and 62% of said outer diameter (D1).

4. A turbine wheel (36) as set forth in any one of claims 1 to 3 wherein said hub (42) extends along a longitudinal axis (A) such that said backwall (46) is located adjacent one end and said blades (44) extend toward another end.

5. A turbine wheel (36) as set forth in claim 4 wherein said datum ring (50) extends axially away from said first backwall surface (46a) along said longitudinal axis (A).

6. A turbine wheel (36) as set forth in claim 4 or claim 5 wherein said datum ring (50) extends circumferentially about said longitudinal axis (A).

7. A turbine wheel (36) as set forth in any one of claims 1 to 6 wherein said first backwall surface (46a) has a flat portion (52) extending radially away from said datum ring (50) to said outer diameter (D1) and relative to said longitudinal axis (A).

8. A turbine wheel (36) as set forth in claim 7 wherein said flat portion (52) includes at least one of a notch, scallop, or channel.

9. A turbine wheel (36) as set forth in any one of claims 1 to 8 wherein said backwall (46) and said datum ring (50) are integral, unitary, and one-piece.

10. A turbine wheel (36) as set forth in any one of claims 1 to 9 wherein portions of outer edges of said blades (44) extending from said second backwall surface (46b) are coextensive with said outer diameter (D1) of said backwall (46).

11. A turbocharger (20) comprising:
a turbine wheel (36) as set forth in claim 1 to receive exhaust gas from an internal combustion engine; and
a turbocharger shaft (40) coupled to and rotatable by said turbine wheel (36), said turbocharger shaft (40) extending along a longitudinal axis (A).

12. A turbocharger (20) as set forth in claim 11 wherein said datum ring (50) is further defined in a range between 55% and 65% of said outer diameter (D1).

13. A turbocharger (20) as set forth in claim 11 wherein said datum ring (50) is further defined in a range between 58% and 62% of said outer diameter (D1).

14. A turbocharger (20) as set forth in any one of claims 11 to 13 wherein said datum ring (50) extends axially way from said first backwall surface (46a) to said outer diameter (D1) and relative to said longitudinal axis (A).

15. A turbocharger (20) as set forth in any one of claims 11 to 14 wherein said datum ring (50) extends circumferentially about said longitudinal axis (A).

16. A turbocharger (20) as set forth in any one of claims 11 to 15 wherein said backwall (46) and said datum ring (50) are integral, unitary, and one-piece.

17. A turbocharger (20) as set forth in claim 11, further comprising:
a turbine housing (24) extending along said longitudinal axis (A) and defining an inlet (30) for receiving the exhaust gas and an outlet (32) for expelling the exhaust gas;
wherein said turbine wheel (36) is disposed within said turbine housing (24) and rotatable with said turbocharger shaft (40)
and wherein portions of outer edges of said blades (44) extending from said second backwall surface (46b) are coextensive with said outer diameter (D1) of said backwall (46), wherein said backwall (46) and said datum ring (50) are integral, unitary, and one-piece.

## Patentansprüche

1. Turbinenrad (36) für einen Turbolader (20), umfassend:
eine Nabe (42);
eine Mehrzahl von Schaufeln (44), die sich von der Nabe (42) aus erstrecken; und
eine Rückwand (46), die sich von der Nabe (42) aus erstreckt und einen Außendurchmesser (D1) aufweist, wobei die Rückwand (46) eine erste Rückwandoberfläche (46a) und eine gegenüberliegende zweite Rückwandoberfläche (46b) beinhaltet;
**dadurch gekennzeichnet, dass** die erste Rückwandoberfläche (46a) einen Bezugsring (50) mit einem Durchmesser in einem Bereich zwischen 50% und 85% des Außendurchmessers (D1) aufweist, und wobei das Turbinenrad einstückig gegossen ist.

2. Turbinenrad (36) nach Anspruch 1, wobei der Bezugsring (50) weiterhin in einem Bereich zwischen 55% und 65% des Außendurchmessers (D1) definiert ist.

3. Turbinenrad (36) nach Anspruch 1, wobei der Bezugsring (50) weiterhin in einem Bereich zwischen 58% und 62% des Außendurchmessers (D1) definiert ist.

4. Turbinenrad (36) nach irgendeinem der Ansprüche 1 bis 3, wobei sich die Nabe (42) entlang einer Längsachse (A) derart erstreckt, dass sich die Rückwand (46) neben einem Ende befindet und sich die Schaufeln (44) zu einem anderen Ende hin erstrecken.

5. Turbinenrad (36) nach Anspruch 4, wobei sich der Bezugsring (50) axial von der ersten Rückwandoberfläche (46a) aus entlang der Längsachse (A) erstreckt.

6. Turbinenrad (36) nach Anspruch 4 oder Anspruch 5, wobei sich der Bezugsring (50) umfänglich um die Längsachse (A) erstreckt.

7. Turbinenrad (36) nach irgendeinem der Ansprüche 1 bis 6, wobei die erste Rückwandoberfläche (46a) einen flachen Abschnitt (52) hat, der sich radial vom Bezugsring (50) aus zum Außendurchmesser (D1) und relativ zur Längsachse (A) erstreckt.

8. Turbinenrad (36) nach Anspruch 7, wobei der flache Abschnitt (52) zumindest eines von einer Kerbe, eine Ausbeulung oder einen Kanal beinhaltet.

9. Turbinenrad (36) nach irgendeinem der Ansprüche 1 bis 8, wobei die Rückwand (46) und der Bezugsring (50) integral, einheitlich und einteilig ausgebildet sind.

10. Turbinenrad (36) nach irgendeinem der Ansprüche 1 bis 9, wobei Abschnitte äußerer Kanten der Schaufeln (44), die sich von der zweiten Rückwandoberfläche (46b) aus erstrecken, koextensiv mit dem Außendurchmesser (D1) der Rückwand (46) sind.

11. Turbolader (20), umfassend:
ein Turbinenrad (36) nach Anspruch 1, um Abgas aus einem Verbrennungsmotor aufzunehmen; und
eine Turboladerwelle (40), die mit dem Turbinenrad (36) gekoppelt und dadurch drehbar ist, wobei sich die Turboladerwelle (40) entlang einer Längsachse (A) erstreckt.

12. Turbolader (20) nach Anspruch 11, wobei der Bezugsring (50) weiterhin in einem Bereich zwischen 55% und 65% des Außendurchmessers (D1) definiert ist.

13. Turbolader (20) nach Anspruch 11, wobei der Bezugsring (50) weiterhin in einem Bereich zwischen 58% und 62% des Außendurchmessers (D1) definiert ist.

14. Turbolader (20) nach irgendeinem der Ansprüche 11 bis 13, wobei sich der Bezugsring (50) axial von der ersten Rückwandoberfläche (46a) aus zum Außendurchmesser (D1) und relativ zur Längsachse (A) erstreckt.

15. Turbolader (20) nach irgendeinem der Ansprüche 11 bis 14, wobei sich der Bezugsring (50) umfänglich um die Längsachse (A) erstreckt.

16. Turbolader (20) nach irgendeinem der Ansprüche 11 bis 15, wobei die Rückwand (46) und der Bezugsring (50) integral, einheitlich und einteilig ausgebildet sind.

17. Turbolader (20) nach Anspruch 11, weiterhin umfassend:
ein Turbinengehäuse (24), das sich entlang der Längsachse (A) erstreckt und einen Einlass (30) zur Aufnahme des Abgases und einen Auslass (32) zum Ausstoßen des Abgases definiert;
wobei das Turbinenrad (36) innerhalb des Turbinengehäuses (24) angeordnet und mit der Turboladerwelle (40) drehbar ist,
und wobei sich Abschnitte äußerer Kanten der Schaufeln (44), die sich von der zweiten Rückwandoberfläche (46b) aus erstecken, koextensiv mit dem Außendurchmesser (D1) der Rückwand (46)sind, wobei die Rückwand (46) und der Bezugsring (50) integral, einheitlich und einteilig ausgebildet sind.

## Revendications

1. Roue de turbine (36) pour un turbocompresseur (20), comprenant :
un moyeu (42) ;
une pluralité de pales (44) s'étendant depuis ledit moyeu (42) ; et
une paroi arrière (46) s'étendant depuis ledit moyeu (32) et ayant un diamètre extérieur (D1), ladite paroi arrière (46) comportant une première surface de paroi arrière (46) et une deuxième surface de paroi arrière opposée (46b) ;
**caractérisée en ce que** ladite première surface de paroi arrière (46a) comporte une bague de référence (50) ayant un diamètre dans une plage comprise entre 50 % et 85 % dudit diamètre extérieur (D1), et **en ce que** ladite roue de turbine est coulée intégralement.

2. Roue de turbine (36) selon la revendication 1, dans laquelle ladite bague de référence (50) est en outre définie dans une plage comprise entre 55 % et 65 % dudit diamètre extérieur (D1).

3. Roue de turbine (36) selon la revendication 1, dans laquelle ladite bague de référence (50) est en outre définie dans une plage comprise entre 58 % et 62 % dudit diamètre extérieur (D1).

4. Roue de turbine (36) selon l'une quelconque des revendications 1 à 3, dans laquelle ledit moyeu (40) s'étend le long d'un axe longitudinal (A) de telle sorte que ladite paroi arrière (46) soit adjacente à une extrémité et que lesdites pales (44) s'étendent vers une autre extrémité.

5. Roue de turbine (36) selon la revendication 4, dans laquelle ladite bague de référence (50) s'étend axialement à l'écart de ladite première surface de paroi arrière (46a) le long dudit axe longitudinal (A).

6. Roue de turbine (36) selon la revendication 4 ou la revendication 5, dans laquelle ladite bague de référence (50) s'étend circonférentiellement autour dudit axe longitudinal (A).

7. Roue de turbine (36) selon l'une quelconque des revendications 1 à 6, dans laquelle ladite première surface de paroi arrière (46a) présente une portion plate (52) s'étendant radialement à l'écart de ladite bague de référence (50) jusqu'audit diamètre extérieur (D1) et par rapport audit axe longitudinal (A).

8. Roue de turbine (36) selon la revendication 7, dans laquelle ladite portion plate (52) comporte au moins une encoche, une dentelure, ou un canal.

9. Roue de turbine (36) selon l'une quelconque des revendications 1 à 8, dans laquelle ladite paroi arrière (46) et ladite bague de référence (50) sont intégrales, unitaires et d'une seule pièce.

10. Roue de turbine (36) selon l'une quelconque des revendications 1 à 9, dans laquelle des portions de bords extérieurs desdites pales (44) s'étendant depuis ladite deuxième surface de paroi arrière (46b) s'étendent de manière coextensive avec ledit diamètre extérieur (D1) de ladite paroi arrière (46) .

11. Turbocompresseur (20), comprenant :
une roue de turbine (36) selon la revendication 1, prévue pour recevoir des gaz d'échappement provenant d'un moteur à combustion interne ; et
un arbre de turbocompresseur (40) accouplé à ladite roue de turbine (36) et pouvant être entraîné en rotation par celle-ci, ledit arbre de turbocompresseur (40) s'étendant le long d'un axe longitudinal (A).

12. Turbocompresseur (20) selon la revendication 11, dans lequel ladite bague de référence (50) est en outre définie dans une plage comprise entre 55 % et 65 % dudit diamètre extérieur (D1).

13. Turbocompresseur (20) selon la revendication 11, dans lequel ladite bague de référence (50) est en outre définie dans une plage comprise entre 58 % et 62 % du diamètre extérieur (D1).

14. Turbocompresseur (20) selon l'une quelconque des revendications 11 à 13, dans lequel ladite bague de référence (50) s'étend axialement à l'écart de ladite première surface de paroi arrière (46a) jusqu'audit diamètre extérieur (D1) et par rapport audit axe longitudinal (A).

15. Turbocompresseur (20) selon l'une quelconque des revendications 11 à 14, dans lequel ladite bague de référence (50) s'étend circonférentiellement autour dudit axe longitudinal (A).

16. Turbocompresseur (20) selon l'une quelconque des revendications 11 à 15, dans lequel ladite paroi arrière (46) et ladite bague de référence (50) sont intégrales, unitaires et d'une seule pièce.

17. Turbocompresseur (20) selon la revendication 11, comprenant en outre :
un carter de turbine (24) s'étendant le long dudit axe longitudinal (A) et définissant une entrée (30) pour recevoir les gaz d'échappement et une sortie (32) pour évacuer les gaz d'échappement ;
ladite roue de turbine (36) étant disposée à l'intérieur du carter de turbine (24) et pouvant tourner avec ledit arbre de turbocompresseur (40) et des portions de bords extérieurs desdites pales (34) s'étendant depuis ladite deuxième surface de paroi arrière (46b) s'étendant de manière coextensive avec ledit diamètre extérieur (D1) de ladite paroi arrière (46), ladite paroi arrière (46) et ladite bague de référence (50) étant intégrales, unitaires et d'une seule pièce.
